# EUROPEAN PATENT SPECIFICATION

(11) **EP 3 636 464 B1**
(45) Date of publication and mention of the grant of the patent: **09.11.2022**
(21) Application number: 19382854.8
(22) Date of filing: 03.10.2019
(51) Int. Cl.: B60G 11/46, B62D 61/12, B60G 7/04, B60G 9/00

(54) **LIFTING DEVICE FOR A VEHICLE AXLE**
HEBEVORRICHTUNG FÜR EINE FAHRZEUGACHSE
DISPOSITIF DE LEVAGE POUR UN ESSIEU DE VÉHICULE

(30) Priority: 04.10.2018 ES 201831517 U
(43) Date of publication of application: 15.04.2020
(73) Proprietor: Accesorios y Elevadores Valencia, S.L., 46530 Puzol (Valencia) (ES)
(72) Inventor: MORENO IBAÑEZ, Alberto, 46530 Puzol (ES)
(74) Representative: Isern Patentes y Marcas S.L.

(56) References cited:
- EP-A1- 2 915 727
- EP-B2- 0 836 984
- CN-Y- 201 205 856
- ES-U- 1 051 061
- Unknown: "Relevages d'essieu pour remorques et semi-remorques", , 1 May 2013 (2013-05-01), pages 1-47, XP055671505, Retrieved from the Internet: URL:https://www.cfj-consulting.fr/app/down load/8647146/Catalogue%20Relevages.pdf [retrieved on 2020-02-25]
- Unknown: "MBS-V2 Range Air Suspension for grooved VALX axles VALX Trailer axles", , 1 March 2018 (2018-03-01), pages 1-33, XP055671502, Retrieved from the Internet: URL:https://www.valx.eu/media/423005/tbm_2 052-01-valx-mbs-v2.pdf [retrieved on 2020-02-25]

## Description

### TECHNICAL FIELD OF THE INVENTION

The present invention is related to lifting devices for a vehicle wheel axle of the type comprising an inflatable bellows with pressurised air, the movement of which is limited by arms articulated with respect to the chassis of the vehicle or with respect to the lower support of the lifting device. In particular, the invention is related to the configuration of the fastening between the arms and the upper end of the bellows.

### STATE OF THE ART

In the field of the art, there are many inventions related to lifting devices for isolating or lifting at least one of the rolling axles in freight vehicles, in order to prevent the wheels of said axle from coming into contact with the ground in order to reduce friction and save on fuel, tyres, etc. In particular, the literature, with respect to these lifting devices, discloses numerous documents in which the lifting device is provided on already-assembled elements of the suspension of the vehicle, more specifically against the suspension bolt.

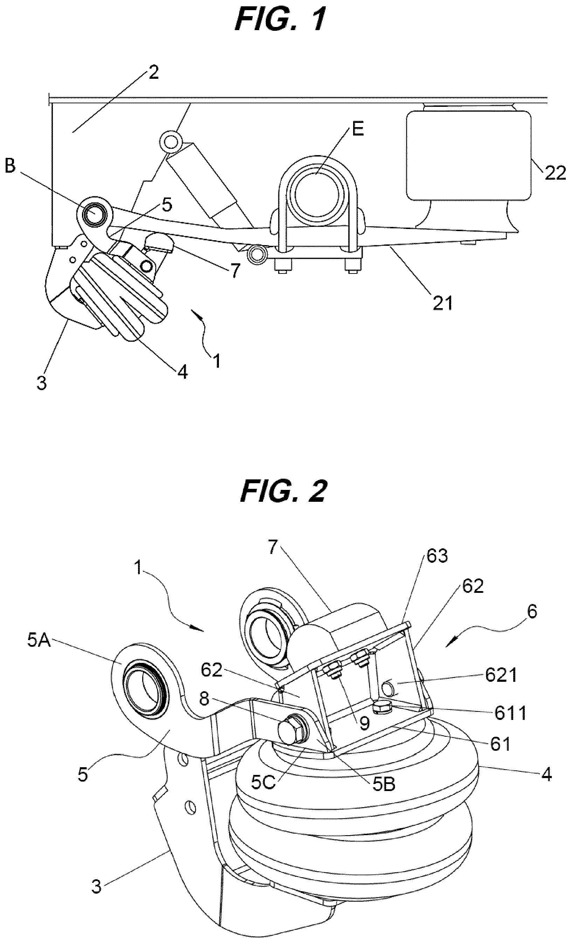

Within the background the European patent EP0836984 B2 stands out, which discloses an embodiment wherein the spacer of the axle-lifting device comprises an assembly element which is in turn comprised by two halves (21-22) which are joined together by means of a bolt connection. In figure 2 of this prior art, it can be seen that the halves (21) and (22) of the upper support of the lifting device comprise horizontal plates (25) and (26) which serve to assemble both parts to each other, by means of tightening elements which will be placed through the holes incorporated in said parts.

As a result of this structural configuration, said assembly screws must be placed on the inside of the lifting support, which implies a hidden tightening plane that is difficult for a user to access, for which reason the assembly operation is complex and not very ergonomic.

At the prior art are known different documents related to lifting devices for a vehicle wheel axle.

For example, the following internet publication discloses the preamble of claim 1: U RL:https:/ /www.cfj-consulting. fr/app/download/864 7146/Catalogue%20 Relevages. pdf and another internet publication discloses another lifting device: URL:https://www.valx.eu/media/423005/tbm_2052-01-valx-mbs-v2.pdf

Other document ES1051061 U discloses a lifting device for the rolling axis of industrial vehicles, trailers and semi-trailers, which being of the type that are coupled to the support of the pneumatic suspension for the spring arm to which the rolling axis to be lifted is associated, specifically of the type of which are pivotably mounted on the articulated joint bolt between said support and the spring arm, it is characterized in that it is constituted from a pair of lateral pieces, substantially flattened and of "L" configuration, initially independent of each other, provided at its upper end of respective holes for coupling to the ends of said articulation bolt, on bushes previously coupled coaxially to the ends of said bolt, said parts subsequently being fixed to each other, after the assembly thereof on the bolt, by means of the classic bellows, rubber diapres or pneumatic membrane that acts as lifting means proper and which adapts and fixes inferiorly or superiorly to the lower branches of said lateral pieces.

Other document CN201205856Y discloses an air suspension structure of a high platform semi-trailer single arm swing comprises a frame, a plate spring assembly, an axletree and a vibration damper assembly. The plate spring assembly is arranged on the upper end face of the axletree, and the coil-shaped end at the head of the plate spring assembly is connected with a through-bolt of a plate spring bracket assembly; the middle part of the plate spring assembly and a cover plate are arranged in sequence and connected by a long bolt and the axletree, and the tail part of the plate spring assembly is connected with an air bag saddle piece and the lower end face of a loading air bag assembly by the bolt; the upper end face of the loading air bag assembly is connected with the lower end face of an air bag bracket assembly by a bolt, the upper end of the air bag bracket assembly is welded on the frame, and the air bag bracket assembly is equipped with a hoisting air bag. The load is shared by the plate spring and the loading air bag, and the loading air bag is charged and the hoisting air bag is degassed by a conduit control to enable a bridge to be laid down on the road to bear some loads so as to avoid overloading, and when in idle load, the loading air bag is degassed while the hoisting air bag is charged to enable the tire of the bridge to be lifted away from the ground so as to relieve the abrasion of the tire and reduce energy consumption.

Based on the foregoing, a series of improvements that solve the technical difficulty found need to be provided in a lifting device for a vehicle axle.

### DESCRIPTION

In order to provide a solution to the need found, the present invention provides a lifting device for a vehicle axle, the axle being supported by a suspension arm which is pivotally coupled to a suspension support by means of a suspension bolt, the lifting device being of the type comprising:
- a fixed base coupled to the suspension support,
- a bellows element coupled to said base,
- a connecting structure comprising at least one lower plate coupled to the bellows element, a pair of lateral plates projecting from the lower plate in a direction essentially perpendicular to said lower plate being essentially parallel to each other, and an upper plate essentially perpendicular to the lateral plates,
- a stop element located above the upper plate and configured to come into contact with the suspension arm of the vehicle axle, and
- a pair of arms articulated on one of the ends thereof to the suspension support or to the fixed base and on the other fastened to the connecting structure.

The invention consists of the connecting structure being a single piece, and each arm being coupled to each lateral plate by means of only one bolt, for which each lateral plate is provided with one hole, and a portion of the arms near the second end of each arm resting on the lower plate of the connecting structure, this portion of the arms and its rest on the lower plate being configured to prevent a relative movement or rotation between the arms and the connecting structure.

This configuration is thus suitable for preventing the relative movement or rotation between the arms and the connecting structure, and ensures that both elements, together with the upper end of the bellows and the stop element, can rotate together with respect to the pivoting anchor of the first end of the arms.

With this invention, a lifting device is obtained, the assembly of which is simple, thanks to the ease of access to the lateral plates. Given that in the assembly location, there is a multitude of elements and braces that meet which substantially complicate the handling thereof, the ease of assembly is a significant advantage.

As a consequence of the above, time is reduced and the ergonomics for assembling the lifting device on a suspension of an already-manufactured industrial vehicle are improved. The assembly is economically optimised, since the coupling of the spacer requires simple fastening elements such as screws or similar for the coupling of the connecting structure.

In addition to the above, there is also an advantage of a greater overall robustness of the lifting device, since the portion of the arms resting on the lower plate of the connecting structure results in an additional resting surface for such arms, unlike other existing devices, wherein the arms are cantilevered.

In other alternative embodiments, the upper plate is provided with holes for coupling the stop element by means of bolts or similar.

### BRIEF DESCRIPTION OF THE FIGURES

The foregoing and other advantages and features will be more fully understood from the following detailed description of exemplary embodiments with reference to the accompanying drawings, which should be considered by way of illustration and not limitation, in which:
- Fig. 1 is a side view of the assembly of the spacer of the invention in a lifting device for a vehicle axle, wherein components of the lifting device, as well as the vehicle suspension, are also seen.
- Fig. 2 is a perspective view of the assembled spacer with several of the components of the lifting device for a vehicle axle.

### DETAILED DESCRIPTION OF AN EXEMPLARY EMBODIMENT

In the following detailed description, numerous specific details are set forth in the form of examples to provide a thorough understanding of the relevant teachings. However, it will be apparent to those skilled in the art that the present teachings can be implemented without such details.

Figure 1 shows the implementation of the lifting device (1) object of the present invention, of the type that among other aspects comprises a fixed base (3) which is coupled to a suspension support (2) linked to the chassis of the vehicle, a suspension arm (21) of a vehicle axle (E) which is pivotally coupled on one end to said suspension support (2) by means of a suspension bolt (B) and on an opposite end to a gas-type spring system (22) and a pneumatic bellows element (4) coupled to the fixed base (3). The device (1) is configured in such a manner that by an actuation of the bellows element (4), an upper stop (7) comes into contact with the suspension arm (21) and transmits the pressure exerted by the bellows element (4) to the latter, such that the vehicle axle (E) is lifted and the corresponding wheels come off the ground.

As seen in figures 1 and 2, the device (1) comprises a connecting structure (6) which is provided with at least one lower plate (61) configured to be coupled to the bellows element (4). As shown in figure 2, the lower plate (61) is preferably an integral plate wherein holes (611) are defined, which are individually passed through by bolts (612) which are coupled to the bellows element (4) such that they secure the lower plate (61) against said bellows element (4).

A pair of lateral plates (62) project from the lower plate (61) in a direction which is essentially perpendicular to said lower plate (61), these lateral plates (62) being essentially parallel to each other.

The connecting structure (6) also comprises an upper plate (63) which is essentially perpendicular to the lateral plates (62) and is opposite the lower plate (61). Preferably, the upper plate (63) is inclined with respect to the lower plate (61), as shown in figure 2. Likewise, the upper plate (63) is provided with holes (631) for coupling the stop element (7) by means of bolts (9) or similar.

According to the invention, the connecting structure (6) is a single piece obtained from different manufacturing processes.

In order to couple this stop element (7), holes (631) are arranged in the upper plate (63) wherein bolts (9) or similar are inserted which are linked to said stop element (7), such that the securing of these bolts (9) or similar with nuts against the upper plate (63) generates the coupling of the stop element (7).

The stop element (7) is, as generally known in the art, an element made of rubber or similar with an elasticity which enables the lifting pressure to be transmitted from the bellows element (4) to the suspension arm (21) without generating any deformation in the latter.

The bolts (9) or similar element can be permanently incorporated in the stop element (7) or can be coupled by means of known techniques.

Moreover, as seen in figures 1 and 2, the device (1) comprises two arms (5), provided on a first end (5A) to be pivotally coupled to the suspension support (2) or to the fixed base (3), and on a second end (5B) to be fastened to the lateral plates (62) of the connecting structure (6).

In the embodiment shown in figure 2, the arms (5) comprise at the first end (5A) bushings coupled with known techniques in a hole provided at the end (5A). For this particular case, the chassis element has projections (not shown in the figure) for coupling the bushings, such that each arm element (5) can pivot with respect to said projection. With respect to the second end (5B), it is configured to be coupled to the lateral plates (62), which are provided with holes (621) for coupling by means of only one bolt.

Additionally, a portion of the arms (5C) near the second end (5B) rests on the lower plate (61) of the connecting structure (6). Figure 2 shows that the portion (5C) corresponds to a flat portion which rests on the lower plate (61), obtaining a greater rigidity of the device (1) as a whole.

This configuration is thus suitable for preventing the relative movement or rotation between the arms (5) and the connecting structure (6), and ensures that both elements, together with the upper end of the bellows (4) and the stop element (7), can rotate together with respect to the pivoting anchor of the first end (5A) of the arms (5).

## Claims

1. A lifting device (1) for a vehicle axle (E), vehicle axle, suspension arm and suspension support, the vehicle axle (E) being supported by the suspension arm (21) which is pivotally coupled to the suspension support (2) by means of a suspension bolt (B), the device (1) being of the type comprising:
- a fixed base (3) coupled to the suspension support (2),
- a bellows element (4) coupled to said base (3),
- a connecting structure (6) comprising at least one lower plate (61) coupled to the bellows element (4), a pair of lateral plates (62) projecting from the lower plate (61) in an essentially perpendicular direction and being essentially parallel to each other, and an upper plate (63) essentially perpendicular to the lateral plates (62),
- a stop element (7) located above the upper plate (63) and configured to come into contact with the suspension arm (21) of the vehicle axle, and
- a pair of arms (5), provided on a first end (5A) to be pivotally coupled to the suspension support (2) or to the fixed base (3) of the lifting device, and on a second end (5B) to be fastened to the lateral plates (62) of the connecting structure (6),
**characterised in that** the connecting structure (6) is a single piece, and each arm (5) is coupled to each lateral plate (62) by means of only one bolt, for which each lateral plate is provided with one hole (621), and **in that** a portion of the arms (5C) near the second end (5B) of each arm (5) rests on the lower plate (61) of the connecting structure (6), and this portion of the arms (5C) and its rest on the lower plate (61) is configured to prevent a relative movement or rotation between the arms (5) and the connecting structure (6).

2. The device according to claim 1, **characterised in that** the arms (5) comprise at the first end (5A) a bushing coupled in a hole provided to house projections of a chassis element.

3. The device according to claim 1 or 2, **characterised in that** the upper plate (63) is provided with holes (631) for coupling the stop element (7) by means of bolts (9).

## Patentansprüche

1. Hebevorrichtung (1) für eine Fahrzeugachse (E), eine Fahrzeugachse, einen Aufhängungsarm und einen Aufhängungsträger, wobei die Fahrzeugachse (E) durch den Aufhängungsarm (21) getragen wird, der schwenkbar mit dem Aufhängungsträger (2) mittels eines Aufhängungsbolzens (B) gekoppelt ist, wobei die Vorrichtung (1) von der Art ist, die umfasst:
- ein feststehendes Unterteil (3), das mit dem Aufhängungsträger (2) gekoppelt ist,
- ein Balgelement (4), das mit dem Unterteil (3) gekoppelt ist,
- eine Verbindungsstruktur (6), die mindestens eine untere Platte (61), die mit dem Balgelement (4) gekoppelt ist, ein Paar seitlicher Platten (62), die von der unteren Platte (61) in einer im Wesentlichen senkrechten Richtung hervorstehen und im Wesentlichen parallel ist zueinander sind, und eine obere Platte (63) umfasst, die im Wesentlichen senkrecht zu den seitlichen Platten (62) ist,
- ein Anschlagelement (7), das sich über der oberen Platte (63) befindet und konfiguriert ist, um mit dem Aufhängungsarm (21) der Fahrzeugachse in Kontakt zu gelangen, und
- ein Paar Arme (5), die an einem ersten Ende (5A) zum schwenkbaren Koppeln mit dem Aufhängungsträger (2) oder dem festen Unterteil (3) der Hebevorrichtung und an einem zweiten Ende (5B) zum Befestigen an den seitlichen Platten (62) der Verbindungsstruktur (6) bereitgestellt sind,
**dadurch gekennzeichnet, dass** die Verbindungsstruktur (6) aus einem Stück besteht und jeder Arm (5) mit jeder seitlichen Platte (62) mittels nur einer Schraube gekoppelt ist, für die jede seitliche Platte mit einem Loch (621) versehen ist, und dadurch, dass ein Abschnitt der Arme (5C) nahe dem zweiten Ende (5B) jedes Arms (5) auf der unteren Platte (61) der Verbindungsstruktur (6) ruht und dieser Abschnitt der Arme (5C) und seine Auflage auf der unteren Platte (61) konfiguriert ist, um eine relative Bewegung oder Drehung zwischen den Armen (5) und der Verbindungsstruktur (6) zu verhindern.

2. Vorrichtung nach Anspruch 1, **dadurch gekennzeichnet, dass** die Arme (5) an dem ersten Ende (5A) eine Buchse umfassen, die in ein Loch gekoppelt ist, das bereitgestellt ist, um Vorsprünge eines Chassiselements aufzunehmen.

3. Vorrichtung nach Anspruch 1 oder 2, **dadurch gekennzeichnet, dass** die obere Platte (63) mit Löchern (631) zum Koppeln des Anschlagelements (7) mittels Bolzen (9) versehen ist.

## Revendications

1. Dispositif de levage (1) pour un essieu de véhicule (E), essieu de véhicule, bras de suspension et support de suspension, l'essieu du véhicule (E) étant supporté par le bras de suspension (21) qui est couplé de manière pivotante au support de suspension (2) au moyen d'un boulon de suspension (B), le dispositif (1) étant du type comprenant :
- une base fixe (3) couplée au support de suspension (2),
- un élément de soufflet (4) couplé à ladite base (3),
- une structure de liaison (6) comprenant au moins une plaque inférieure (61) couplée à l'élément de soufflet (4), une paire de plaques latérales (62) faisant saillie de la plaque inférieure (61) dans une direction essentiellement perpendiculaire et étant essentiellement parallèles l'une à l'autre, et une plaque supérieure (63) essentiellement perpendiculaire aux plaques latérales (62),
- un élément de butée (7) situé au-dessus du plateau supérieur (63) et configuré pour venir en contact avec le bras de suspension (21) de l'essieu de véhicule, et
- une paire de bras (5), fournie sur une première extrémité (5A) pour être couplée de manière pivotante au support de suspension (2) ou à la base fixe (3) du dispositif de levage, et sur une seconde extrémité (5B) pour être attachée aux plaques latérales (62) de la structure de liaison (6),
**caractérisés en ce que** la structure de liaison (6) est une pièce unique, et chaque bras (5) est couplé à chaque plaque latérale (62) au moyen d'un seul boulon, pour lequel chaque plaque latérale est fournie avec un trou (621), et **en ce qu'**une partie des bras (5C) proche de la seconde extrémité (5B) de chaque bras (5) appuie sur la plaque inférieure (61) de la structure de liaison (6), et cette partie des bras (5C) et son appui sur le plateau inférieur (61) est configurée pour empêcher un mouvement relatif ou une rotation relative entre les bras (5) et la structure de liaison (6).

2. Dispositif selon la revendication 1, **caractérisé en ce que** les bras (5) comprennent au niveau de la première extrémité (5A) une bague couplée dans un trou fourni pour loger des saillies d'un élément de châssis.

3. Dispositif selon la revendication 1 ou 2, **caractérisé en ce que** la plaque supérieure (63) est fournie avec des trous (631 ) pour le couplage de l'élément de butée (7) au moyen de boulons (9).
